# EUROPÄISCHE PATENTSCHRIFT

(11) **EP 2 567 263 B1**
(45) Veröffentlichungstag und Bekanntmachung des Hinweises auf die Patenterteilung: **07.01.2015**
(21) Anmeldenummer: 11710718.5
(22) Anmeldetag: 09.03.2011
(51) Int. Cl.: G01V 3/10

(54) **ERFASSUNG EINES METALLISCHEN ODER MAGNETISCHEN OBJEKTS**
DETECTION OF A METAL OR MAGNETIC OBJECT
DÉTECTION D'UN OBJET MÉTALLIQUE OU MAGNÉTIQUE

(30) Priorität: 07.05.2010 DE 102010028722
(43) Veröffentlichungstag der Anmeldung: 13.03.2013
(73) Patentinhaber: Robert Bosch GmbH, 70442 Stuttgart (DE)
(72) Erfinder: ZIBOLD, Tobias, 70567 Stuttgart (DE); ALBRECHT, Andrej, 70567 Stuttgart (DE)
(86) Internationale Anmeldenummer: PCT/EP2011/053509
(87) Internationale Veröffentlichungsnummer: WO 2011/138065

(56) Entgegenhaltungen:
- DE-A1-102005 002 238
- DE-A1-102007 053 881
- GB-A- 2 146 128
- US-A- 5 729 143

## Beschreibung

Bei bestimmten Bearbeitungen von Werkstücken besteht die Gefahr, dass ein im Werkstück verborgener Gegenstand durch die Bearbeitung beschädigt wird. Beispielsweise kann beim Bohren in eine Wand eine Wasser-, Strom- oder Gasleitung beschädigt werden, die innerhalb der Wand verläuft. Im umgekehrten Fall kann es wünschenswert sein, die Bearbeitung gerade so durchzuführen, dass ein im Werkstück verborgener Gegenstand mitbearbeitet wird, beispielsweise wenn das Loch aus dem obigen Beispiel durch ein Armierungseisen oder eine tragende Konstruktion innerhalb der Wand verlaufen soll.

### Stand der Technik

Zur Erfassung eines solchen verborgenen Gegenstandes sind spulenbasierte Metalldetektoren im Stand der Technik bekannt. Derartige Detektoren erzeugen ein magnetisches Feld in einem Messbereich. Befindet sich ein metallischer Gegenstand im Messbereich, so wird der Gegenstand aufgrund seiner Beeinflussung des erzeugten magnetischen Feldes erkannt. Häufig werden zur Bestimmung des erzeugten Magnetfeldes wenigstens zwei Empfangsspulen verwendet, die derartig orientiert und miteinander verbunden sind, dass in Abwesenheit eines metallischen Objekts im Messbereich das von beiden Empfangsspulen gemeinsam gelieferte Messsignal gegen Null geht (differentielle Messung). In einer Variante werden mehrere Sendespulen zur Erzeugung des Magnetfeldes verwendet, die so angesteuert werden, dass unabhängig von einer Anwesenheit eines metallischen Objekts im Messbereich das in den beiden Empfangsspulen gemessene Signal gegen Null geht (feldkompensierte Messung).

DE 10 2007 053 881 A1 beschreibt ein Messverfahren zur Bestimmung der Position bzw. des Winkels einer Spule bezüglich zweier weiterer Spulen. Dazu wird mittels zweier winklig zueinander angeordneter Sendespulen ein magnetisches Wechselfeld generiert, Eine Empfangsspule wird in das magnetisch Wechselfeld verbracht und die Ansteuerung der Sendespulen derart verändert, dass in der Empfängsspule von jeder der Sendespulen die gleiche Spannung induziert wird. Ein Verhältnis von den Sendespulen zugeführten Stromwerte dient als Maß für eine Position- und/oder Winkelbestimmung der Empfangsspule bezüglich der Sendespulen.

DE 10 2004 047 189 A1 beschreibt einen Metaildetektor mit Printspulen.

Aus der GB 2 146 128 A ist eine Metalidetektionsvorrichtung mit einem Oszillator, zwei Suchspulen und zwei Kapazitaten bekannt, bei der die Suchspulen und Kapazitäten in einer Brückenschaltung angeordnet sind. Die Spulen erzeugen dabei ein Signal, dessen Phase ein Indikator für das Vorhandensein eines eingeschlossenen Objektes ist. Die Kapazitäten der Vorrichtung der GB 2 146 128 A erzeugen dabei ein Kompensationssignal zur Korrektur der durch die Permeabilität des untersuchten Objektes in den Spulen erzeugten Effekte.

Der Erfindung liegt die Aufgabe zugrunde, einen einfachen und genauen Detektor für ein metallisches Objekt bereitzustellen. Eine weitere Aufgabe der Erfindung besteht in der Angabe eines Verfahrens zur Bestimmung des metallischen Objekts.

### Offenbarung der Erfindung

Die Erfindung löst diese Aufgabe mittels einer Messvorrichtung mit den Merkmalen des Anspruchs 1 und eines Verfahrens mit den Merkmalen des Anspruchs 7. Unteransprüche geben bevorzugte Ausfühningsformen an

Erfindungsgemäß umfasst eine Messvorrichtung zur Erfassung eines metallischen Objekts eine Sendespule zur Erzeugung eines Magnetfeldes sowie ein mit der Sendespule verbundenes Kompensationsnetzwerk, wobei an der Verbindung der Sendespule mit dem Kompensationsnetzwerk eine Differenzspannung anliegt. Eine Steuereinrichtung ist zur Versorgung der Sendespule und des Kom pensationsnetzwerks mit alternierenden Spannungen derart vorgesehen dass ein zu den alternierenden Spannungen taktsynchroner Wechselspannungsanteil der Differenzspannung betragsmäßig minimiert ist. Die Steuereinrichtung ist dazu eingerichtet, das metallische Objekt zu erfassen, wenn das Verhältnis der alternierenden Spannungen nicht zum Verhältnis der durch die Sendespule und das Kompensationsnetzwerk fließenden Ströme korrespondiert

So kann mit Hilfe nur einer einzigen Sendespule das metallische Objekt zuverlässig erfasst werden. Dabei werden die alternierenden Spannungen, die an der Sendespule und an dem Kompensationsetzwerk anliegen, stets so geregelt. dass die über die Sendespule und das Kompensationsnetzwerks abfallenden Spannungen einander entsprechen, auch wenn Impedanzen der Sendespule und des Kompensationsnetzwerks ungleich sind. Das Regelsignal wird als eigentliches Messsignal interpretiert.

Vorzugsweise sind die alternierenden Spannungen Wechselspannungen, um die Magnetfelder der Sendespulen periodisch in Betrag und Phase zu ändern. Die Wechselspannungen ermöglichen die Synchrondemodulation, womit störende Signale mit Frequenzen ungleich der Modulationsfrequenz sehr effektiv unterdrückt werden können. Darüber hinaus können durch die Wechselspannungen wechselnde Magnetfelder erzeugt werden, um Wirbelströme in nichtmagnetischen Materialien wie z.B. Kupfer zu induzieren, aufgrund derer diese dann detektiert werden können.

Das Kompensationsnetzwerk kann wenigstens einen komplexen Widerstand umfassen. Die Impedanzen der Sendespule und des Kompensationsnetzwerks können gleich sein und Störeinflüsse wie Temperatur- und Alterungseffekte können die Sendespule und das Kompensationsnetzwerk in gleicher Weise betreffen, so dass insgesamt ein Einfluss der Störeinflüsse kompensiert ist. Eine Kalibrierung der Messvorrichtung kann dann einmalig im Rahmen einer Herstellung der Messvorrichtung erfolgen und ein weiteres Kalibrieren durch einen Benutzer kann entfallen.

Es kann eine Verbindung zwischen der Sendespule und dem Kompensationsnetzwerk vorgesehen sein, wobei die Steuereinrichtung dazu eingerichtet ist, die Spannungsversorgung in Abhängigkeit einer an der Verbindung anliegenden Differenzspannung zu steuern. So kann eine auf ein Verhältnis von durch die Sendespule und durch das Kompensationsnetzwerk fließenden Strömen hinweisende Spannung leicht und exakt bestimmt werden.

Das Kompensationsnetzwerk kann eine veränderbare Impedanz aufweisen. Dadurch kann eine Empfindlichkeit der Messvorrichtung steuerbar sein. Die Impedanz kann diskret oder stufenlos veränderbar sein und insbesondere in Abhängigkeit des Messsignals durchgeführt werden. Das Kompensationsnetzwerk kann auch magnetisch abgeschirmt sein.

Nach einem weiteren Aspekt der Erfindung umfasst ein Verfahren zur Erfassung eines metallischen Objekts die Schritte des Versorgens einer Sendespule und eines mit der Sendespule verbundenen Kompensationsnetzwerks mit alternierenden Spannungen, des Bestimmens einer an der Verbindung der Sendespule mit dem Kompensationsnetzwerk anliegenden Differenzspannung, wobei das Versorgen der Sendespule und des Kompensationsnetzwerks mit alternierenden Spannungen derart erfolgt, dass ein zu den alternierenden Spannungen taktsynchroner Wechselspannungsanteil der Differenzspannung betragsmäßig minimiert ist; und des Erfassens des Objekts, wenn das Verhältnis der alternierenden Spannungen nicht zum Verhältnis der durch die Sendespule und das Kompensationsnetzwerk fließenden Ströme korrespondiert.

Die Erfindung kann auch als Computerprogrammprodukt ausgeführt sein, wobei ein erfindungsgemäßes Computerprogrammprodukt Programmcodemittel zur Durchführung des beschriebenen Verfahrens umfasst und auf einer Verarbeitungseinrichtung ablaufen oder auf einem computerlesbaren Datenträger gespeichert sein kann.

### Kurze Beschreibung der Figuren

Im Folgenden wird die Erfindung mit Bezug auf die beigefügten Figuren genauer beschrieben, in denen:
- Figur 1: ein Blockschaltbild einer Messvorrichtung;
- Figur 2: eine Detailansicht der Messvorrichtung aus Figur 1;
- Figur 3: eine Anordnung mehrerer Sendespulen für die Messvorrichtung aus Figur 1; und
- Figur 4: ein Ablaufdiagramm eines Verfahrens für die Messeinrichtung aus Figur 1
darstellt.

### Genaue Beschreibung von Ausführungsbeispielen

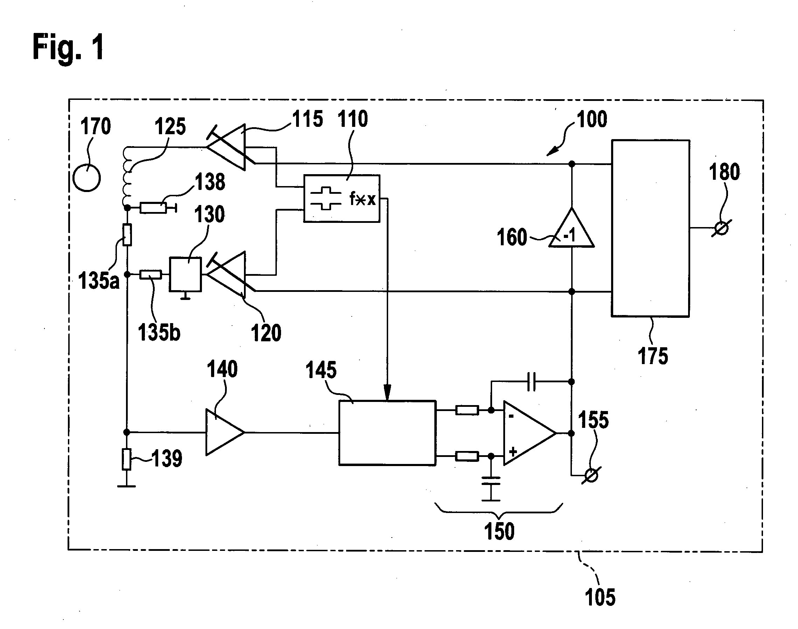

Figur 1 zeigt ein Blockschaltbild einer Messvorrichtung 100. Die Messvorrichtung 100 ist Teil eines Metalldetektors 105 zum Erfassen metallischer Objekte, beispielsweise aus eisenhaltigem Material.

Ein Taktgenerator 110 hat zwei Ausgänge, an denen er um phasenverschobene, vorzugsweise um 180° phasenverschobene, periodische Wechselsignale bereitstellt. Die Wechselsignale können insbesondere Rechteck-, Dreieck- oder Sinussignale umfassen. Die Ausgänge des Taktgenerators sind mit einem ersten steuerbaren Verstärker 115 bzw. einem zweiten steuerbaren Verstärker 120 verbunden. Jeder der steuerbaren Verstärker 115, 120 verfügt über einen Steuereingang, über den er ein Signal entgegennimmt, welches einen Verstärkungsfaktor des steuerbaren Verstärkers 115, 120 steuert. Ein Ausgang des ersten steuerbaren Verstärkers 115 ist mit einer Sendespule 125 und ein Ausgang des zweiten steuerbaren Verstärkers 120 mit einem Kompensationsnetzwerk 130 verbunden. Das Kompensationsnetzwerk 130 stellt eine Impedanz bereit, die im Bereich derer der Sendespule 125 liegt. In einigen Ausführungsformen kann das Kompensationsnetzwerk 130 eine veränderbare Impedanz aufweisen.

Im Folgenden wird eine Ausführungsform beschrieben, bei der die Impedanzen der Sendespule 125 und des Kompensationsnetzwerks 130 einander entsprechen. Für die Funktion der Messvorrichtung 100 ist dies jedoch allgemein nicht erforderlich.

Ein zweiter Anschluss der Sendespule 125 ist mit einem nach Masse führenden Shunt-Widerstand 138 und mit einem zu einem Eingangsverstärker 140 führenden Widerstand 135a verbunden. Das Kompensationsnetzwerk 130 verfügt über einen Masseanschluss und ist über einen Widerstand 135b mit dem Eingangsverstärker 140 verbunden. Die über den Shunt-Widerstand 138 abfallende Spannung ist proportional zu dem durch die Sendespule 125 fließenden Strom. Die über die Widerstände 135a und 135b fließenden Ströme ergeben einen Gesamtstrom über einen dritten Widerstand 139 nach Masse. Dieser Strom ist proportional zur Summe der über den Shunt-Widerstand 138 sowie der im Kompensationsnetzwerk 130 abfallenden Spannung. Damit ist die über den Widerstand 139 gegenüber Masse abfallende Spannung proportional zur Summe der über den Shunt-Widerstand 138 sowie der im Kompensationsnetzwerk 130 abfallenden Spannung. Diese liegt am Eingang des Eingangsverstärkers 140 an.

Der Ausgang des Eingangsverstärkers 140 ist mit einem Synchrondemodulator 145 verbunden. Der Synchrondemodulator 145 ist ferner mit dem Taktgenerator 110 verbunden und empfängt von diesem ein Taktsignal, welches auf die Phasenlage der an den Ausgängen des Taktgenerators 110 bereitgestellten Signale hinweist. In einer einfachen Ausführungsform, bei der die vom Taktgenerator 110 bereitgestellten Signale symmetrische Rechtecksignale sind, kann eines der Ausgangssignale als Taktsignal verwendet werden. Der Synchrondemodulator 145 schaltet im Wesentlichen auf der Basis des vom Taktgenerator 110 bereitgestellten Taktsignals das vom Eingangsverstärker 140 empfangene Signal alternierend an seinen oberen bzw. unteren Ausgang durch.

Die beiden Ausgänge des Synchrondemodulators 145 sind mit einem Integrator (integrierenden Komparator) 150 verbunden, der hier als mit zwei Widerständen und zwei Kondensatoren beschalteter Operationsverstärker dargestellt ist. Andere Ausführungsformen sind ebenfalls möglich, beispielsweise als aktiver Tiefpass. Auch eine digitale Ausführung des Integrators 150 im Anschluss an den Synchrondemodulator 145 ist denkbar, bei der das Signal am Ausgang des Synchrondemodulators 145 zu einem oder mehreren Zeitpunkten innerhalb einer Halbwelle analog zu digital gewandelt wird und dann mit dem entsprechenden Wert aus der nächsten Halbwelle verglichen wird. Die Differenz wird integriert und z.B. wieder in ein analoges Signal überführt und zur Steuerung der Verstärker verwendet.

Während der Synchrondemodulator 145 das vom Eingangsverstärker 140 empfangene Messsignal am unteren seiner Ausgänge bereitstellt, integriert der Integrator 150 dieses Signal über die Zeit und stellt das Resultat an seinem Ausgang bereit. Während der Synchrondemodulator 145 das vom Eingangsverstärker 140 empfangene Messsignal an seinem oberen Ausgang bereitstellt, wird dieses vom Integrator 150 invertiert über die Zeit integriert und das Resultat am Ausgang des Integrators 150 bereitgestellt. Die Spannung am Ausgang des Integrators 150 ist das Integral der Differenz der tiefpassgefilterten Ausgänge des Synchrondemodulators 145.

Das vom Integrator 150 bereitgestellte Signal wird über einen Anschluss 155 zur weiteren Verarbeitung bereitgestellt. Zusätzlich kann ein Mikrocomputer 175 mit den Steuereingängen der steuerbaren Verstärker 115, 120 verbunden sein. Der Mikrocomputer 175 führt einen Vergleich des bereitgestellten Signals mit einem Schwellenwert durch und gibt an einem Ausgang 180 ein Signal aus, welches auf das metallische Objekt hinweist. Das Signal kann in optischer und/oder akustischer Weise einem Benutzer des Metalldetektors 105 dargeboten werden.

Der Mikrocomputer 175 kann darüber hinaus eine weitere Verarbeitung der von den Steuereingängen der steuerbaren Verstärker 115, 120 abgegriffenen Signale durchführen und in deren Abhängigkeit Parameter der Messvorrichtung 100 steuern. Beispielsweise kann eine Frequenz oder Signalform der alternierenden Spannungen an den Ausgängen des Taktgenerators 110 variiert oder eine Empfindlichkeit des Empfangsverstärkers 140 geändert werden. In einer weiteren Ausführungsform sind weitere der gezeigten Elemente der Messvorrichtung 100 durch den Mikrocomputer 175 implementiert, etwa der Taktgenerator 110, der Synchrondemodulator 145 oder der Integrator 150.

Das gleiche Signal des Integrators 150 wird auch zur Steuerung der Verstärkungsfaktoren der steuerbaren Verstärker 115 und 120 verwendet, wobei der zweite steuerbare Verstärker 120 unmittelbar mit dem Ausgang des Integrators 150 verbunden ist und der erste steuerbare Verstärker 115 mittels eines Inverters 160 mit dem Ausgang des Integrators 150 verbunden ist. Der Inverter 160 bewirkt eine Umkehrung des ihm bereitgestellten Signals derart, dass in Abhängigkeit des Ausgangssignals des Integrators 150 der Verstärkungsfaktor des ersten steuerbaren Verstärkers 115 in dem Maß zunimmt wie der Verstärkungsfaktor des zweiten steuerbaren Verstärkers 120 abnimmt bzw. umgekehrt. Es ist auch denkbar, dass nur der Verstärkungsfaktor eines der beiden steuerbaren Verstärker 115, 120 gesteuert wird, während der Verstärkungsfaktor des zweiten steuerbaren Verstärkers 115, 120 auf einem festen Wert gehalten wird.

Befindet sich kein metallisches Objekt 170 im Bereich des von der Sendespule 125 erzeugten Magnetfeldes, so sind die Impedanzen der Sendespule 125 und des Kompensationsnetzwerks 130 gleich groß und zwischen den Widerständen 135a und 135b liegt eine Spannung von Null an. Gegebenenfalls ist die Messvorrichtung 100 auf diese Bedingung zu kalibrieren, bevor ein metallisches Objekt 170 in den Bereich der Sendespule 125 gebracht wird.

Befindet sich das metallische Objekt 170 im Bereich der Sendespule 125, verändert sich dadurch die Impedanz der Sendespule 125 und damit der durch die Sendespule 125 fließende Strom. Dementsprechend ist der taktsynchrone Wechselspannungsanteil der zwischen den Widerständen 135a, 135b anliegende Spannung ungleich Null und das am Ausgang des Integrators 150 anliegende Signal verändert sich um einen Betrag gegenüber Null. Daraufhin werden die steuerbaren Verstärker 115 und 120 gegenläufig so in ihren Verstärkungsfaktoren verändert, dass die Spannungen, die an der Sendespule 125 und am Kompensationsnetzwerk 130 anliegen, derart verändert werden, dass der taktsynchrone Wechselspannungsanteil der zwischen den Widerständen 135a und 135b anliegende Spannung wieder auf Null reduziert ist. Die Anwesenheit des metallischen Objekts 170 kann durch Vergleich der Ausgangsspannung des Integrators 150 mit Null erfasst werden.

Im Fall von unterschiedlichen Impedanzen der Sendespule 125 und des Kompensationsnetzwerks 130 ist das am Anschluss 155 ausgegebene Signal im objektfreien Fall nicht Null sondern ein anderer vorbestimmter Wert. Der oben beschriebene Vergleich des Regelwerts findet dann bezüglich des vorbestimmten Werts statt. Eine Bestimmung des vorbestimmten Werts kann im Rahmen einer Kalibrierung bestimmt werden, indem das Signal am Anschluss 155 in Abwesenheit des metallischen Objekts bestimmt wird.

Das Kompensationsnetzwerk 130 ist vorteilhafterweise möglichst so ausgelegt, dass es Temperatur- und Alterungseffekten unterworfen ist, die denen der Sendespule 125 entsprechen, um durch gleichsinnige Beeinflussung der Elemente 125, 130 eine Beeinflussung der Messvorrichtung 100 durch Temperatur und Alterung insgesamt zu kompensieren. In diesem Fall kann eine Kalibrierung der Messvorrichtung 100 einmalig bei der Produktion der Messeinrichtung 100 durchgeführt werden und muss nicht von einem Benutzer zeitnah zu einer durchzuführenden Messung wiederholt werden.

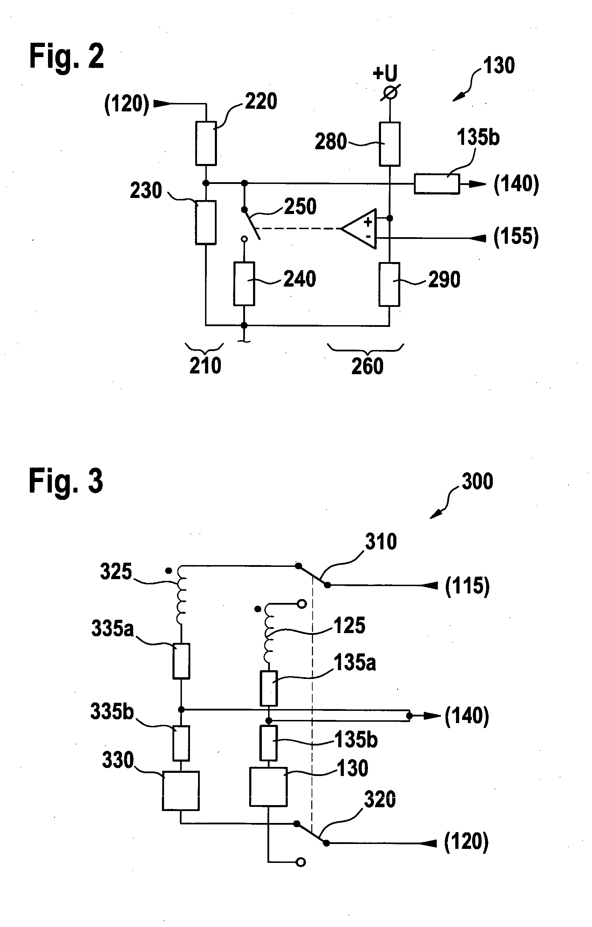

Figur 2 zeigt eine expandierte Darstellung des Kompensationsnetzwerks 130. In einer einfachen Ausführungsform umfasst das Kompensationsnetzwerks 130 lediglich einen komplexen Spannungsteiler 210, der komplexe Widerstände 220 und 230 umfasst. Die komplexen Widerstände 220, 230 sind derart gewählt, dass sie gemeinsam eine Impedanz bilden, die der Impedanz der Sendespule 125 entspricht, wenn kein zu erfassendes metallisches Objekt im Bereich des von der Sendespule 125 erzeugten Magnetfeldes liegt. Die mittels der Widerstände 220 und 230 nach Masse geteilte Spannung des zweiten steuerbaren Verstärkers 120 wird mittels des zweiten Widerstandes 135b ausgekoppelt und an den Eingangsverstärker 140 geführt wie oben mit Bezug auf Figur 1 beschrieben ist.

In einer weiteren Ausführungsform des Kompensationsnetzwerks 130 ist noch ein weiterer komplexer Widerstand 240 vorgesehen, der mittels eines Schalters 250 zum komplexen Widerstand 230 parallel geschaltet werden kann. Durch Betätigen des Schalters 250 kann zwischen zwei verschiedenen Impedanzen des Kompensationsnetzwerks 130 ungeschaltet werden. In entsprechender Weise können auch noch weitere Impedanzen durch paralleles oder serielles Verschalten noch anderer und/oder weiterer komplexer Widerstände wie der komplexe Widerstand 240 erzielt werden.

In einer beispielhaften Implementation wird der Schalter 250 von einem Schwellenwertschalter 260 angesteuert, der einen Komparator (Operationsverstärker) 270 und zwei Widerstände 280 und 290 umfasst. Die Widerstände 280 und 290 bilden einen Spannungsteiler zwischen einer Versorgungsspannung U der Messvorrichtung 100 und Masse. Die geteilte Spannung ist an einen nichtinvertierenden Eingang des Komparators 270 geführt. Ein invertierender Eingang des Komparators 270 ist mit dem Ausgang des Integrators 150 bzw. dem Anschluss 155 verbunden. Übersteigt die vom Integrator 150 bereitgestellte Spannung die durch den Spannungsteiler 280, 290 bereitgestellte Spannung, so betätigt der Komparator 270 den Schalter 250 und verändert dadurch die Impedanz des Kompensationsnetzwerks 130.

Figur 3 zeigt eine Anordnung 300 mit mehren Paaren von Sendespulen und Kompensationsnetzwerken für die Messvorrichtung 100 aus Figur 1. Zusätzlich zu der mit Bezug auf Figur 1 beschriebenen Anordnung der Sendespule 125 und dem Kompensationsnetzwerk 130 mit den Widerständen 135a, 135b sind in entsprechender Verschaltung eine weitere Sendespule 325 und ein weiteres Kompensationsnetzwerk 330 mit weiteren Widerständen 335a, 335b vorgesehen. Nicht dargestellt sind von einem der Anschlüsse der Sendespulen 125, 325 nach Masse führende Widerstände entsprechend dem Shunt-Widerstand 138 in Figur 1. Ebenfalls nicht in Figur 3 dargestellt ist der mit dem Eingangsverstärker 140 verbundene Widerstand 139 aus Figur 1. Die Spulen 125 und 325 können als gedruckte Schaltungen ("Printspulen") auf einer Platine ausgeführt sein. Auf der selben Platine können auch weitere Elemente der Messeinrichtung 100 angeordnet sein.

Zwei miteinander gekoppelte Schalter 310 und 320 verbinden selektiv jeweils Anschlüsse der Sendespule 125 und des Kompensationsnetzwerks 130 oder der Sendespule 325 und des Kompensationsnetzwerks 330 mit den Ausgängen der steuerbaren Verstärker 115, 120 aus Figur 1. Die Verbindungen zwischen zueinander korrespondierenden Widerständen 135a, 135b, 335a und 335b sind miteinander verbunden und führen zum Eingangsverstärker 140.

In einer weiteren Ausführungsform ist nur ein Kompensationsnetzwerk 130 vorgesehen, das mit verschiedenen Sendespulen 125, 325 verschaltet wird. Der Schalter 320 verbindet in diesem Fall selektiv den nicht mit dem Kompensationsnetzwerk 130 verbundenen Anschluss des zweiten Widerstandes 135b mit einem der ersten Widerstände 135a, 335a. Die Elemente 335b und 330 entfallen.

Ändert sich die Differenzspannung am Eingangsverstärker 140, wenn die Schalter 115 und 120 umgeschaltet werden, so kann auf der Basis der geometrischen Anordnung der Spulen 125, 325 auf eine Richtung geschlossen werden, in der das metallische Objekt 210 liegt, beispielsweise durch Triangulation. Ebenso ist es denkbar, auf eine Entfernung des metallischen Objektes zu schließen. Die Richtungsbestimmung kann durch weitere Sendespulen verfeinert werden. Wird eine große Anzahl ausreichend dicht aneinander angeordneter Sendespulen verwendet, so kann eine Auflösung der Messvorrichtung 100 bis in einen bildhaften Bereich hinein gesteigert werden.

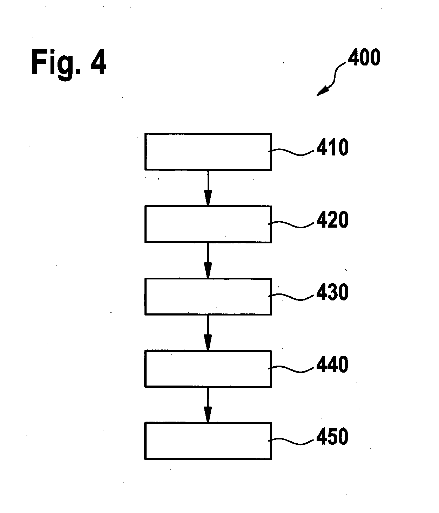

Figur 4 zeigt eine schematisches Ablaufdiagramm eines Verfahrens 400 zur Erfassung eines metallischen Objekts 210 entsprechend der Messvorrichtung 100 aus Figuren 1 und 2. In einem Schritt 410 werden die Sendespule 125 und das Kompensationsnetzwerk 130 jeweils mit alternierenden Spannungen versorgt, wobei die Spannungen gegeneinander phasenverschoben, vorzugsweise um 180° phasenverschoben, sind.

In einem folgenden Schritt 420 wird eine Differenzspannung bestimmt, die sich an den Widerständen 135a und 135b einstellt und die auf ein Verhältnis eines durch die Sendespule 325 zu einem durch das Kompensationsnetzwerk 330 fließenden Strom hinweist. Anschließend wird in einem Schritt 430 die Differenzspannung synchron zu einer Phase der alternierenden Spannungen demoduliert und das Ergebnis integriert.

In einem Schritt 440 werden auf der Basis des integrierten Ergebnis die steuerbaren Verstärker 115 und 120 derart gegenläufig ausgesteuert bis sich der taktsynchrone Wechselspannungsanteil des Differenzsignals wieder Null angenähert hat.

Schließlich wird in einem Schritt 450 verglichen, ob das integrierte Ergebnis um mehr als einen vorbestimmten Betrag von Null abweicht und in diesem Fall das metallische Objekt 170 erfasst. Optional kann ein optischer und/oder akustischer Hinweis auf das metallische Objekt 170 an einen Benutzer ausgegeben werden.

## Patentansprüche

1. Messvorrichtung (100) zur Erfassung eines metallischen Objekts (170), wobei die Messvorrichtung (100) folgendes umfasst:
- eine Sendespule (125) zur Erzeugung eines Magnetfeldes;
- ein mit der Sendespule (125) verbundenes Kompensationsnetzwerk (130);
- wobei an der Verbindung der Sendespule (125) mit dem Kompensationsnetzwerk (130) eine Differenzspannung anliegt;
- eine Steuereinrichtung (110-120, 145-160) zur Versorgung der Sendespule (125) und des Kompensationsnetzwerks (130) mit alternierenden Spannungen derart, dass ein zu den alternierenden Spannungen taktsynchroner Wechselspannungsanteil der Differenzspannung betragsmäßig minimiert ist;
**dadurch gekennzeichnet, dass**
- die Steuereinrichtung (110-120, 145-160) dazu eingerichtet ist, das metallische Objekt (170) zu erfassen, wenn das Verhältnis der alternierenden Spannungen nicht zum Verhältnis der durch die Sendespule (125) und das Kompensationsnetzwerk (130) fließenden Ströme korrespondiert.

2. Messvorrichtung (100) nach einem der vorangehenden Ansprüche, **dadurch gekennzeichnet, dass** die alternierenden Spannungen um zueinander phasenverschobene Wechselspannungen sind, um das Magnetfeld der Sendespule (125) periodisch in Betrag und Phase zu ändern.

3. Messvorrichtung (100) nach einem der vorangehenden Ansprüche, **dadurch gekennzeichnet, dass** das Kompensationsnetzwerk (130) wenigstens einen komplexen Widerstand umfasst.

4. Messvorrichtung (100) nach einem der vorangehenden Ansprüche, **dadurch gekennzeichnet, dass** das Kompensationsnetzwerk (130) eine veränderbare Impedanz aufweist.

5. Messvorrichtung (100) nach einem der vorangehenden Ansprüche, **dadurch gekennzeichnet, dass** die Impedanz in Stufen veränderbar ist.

6. Messvorrichtung (100) nach Anspruch 4 oder 5 **dadurch gekennzeichnet, dass** die Steuereinrichtung (110-120, 145-160) dazu eingerichtet ist, die Impedanz in Abhängigkeit eines Unterschiedes der alternierenden Spannungen zu steuern.

7. Verfahren (400) zur Erfassung eines metallischen Objekts (170), folgende Schritte umfassend:
- Versorgen (410) einer Sendespule (125) und eines mit der Sendespule (125) verbundenen Kompensationsnetzwerks (130) mit alternierenden Spannungen;
- Bestimmen einer an der Verbindung der Sendespule (125) mit dem Kompensationsnetzwerk (130) anliegenden Differenzspannung;
- wobei das Versorgen (420) der Sendespule (125) und des Kompensationsnetzwerks (130) mit alternierenden Spannungen derart erfolgt, dass ein zu den alternierenden Spannungen taktsynchroner Wechselspannungsanteil der Differenzspannung betragsmäßig minimiert ist; und
- Erfassen (440) des Objekts (170), wenn das Verhältnis der alternierenden Spannungen nicht zum Verhältnis der durch die Sendespule (125) und das Kompensationsnetzwerk (130) fließenden Ströme korrespondiert.

8. Computerprogrammprodukt mit Programmcodemitteln zur Durchführung des Verfahrens von Anspruch 7, wenn es auf einer Verarbeitungseinrichtung abläuft oder auf einem computerlesbaren Datenträger gespeichert ist.

## Claims

1. Measuring device (100) for detecting a metallic object (170), wherein the measuring device (100) comprises the following:
- a transmitting coil (125) for generating a magnetic field;
- a compensation network (130) connected to the transmitting coil (125);
- wherein a differential voltage is applied at the connection of the transmitting coil (125) with the compensation network (130);
- a control device (110-120, 145-160) for supplying the transmitting coil (125) and the compensation network (130) with alternating voltages in such a manner that the value of an alternating voltage component, synchronized in timing with the alternating voltages, of the differential voltage is minimized;
**characterized in that**
- the control device (110-120, 145-160) is configured for detecting the metallic object (170) when the ratio of the alternating voltages does not correspond to the ratio of the currents flowing through the transmitting coil (125) and the compensation network (130).

2. Measuring device (100) according to Claim 1, **characterized in that** the alternating voltages are alternating voltages phase-shifted with respect to one another in order to change the magnetic field of the transmitting coil (125) periodically in magnitude and phase.

3. Measuring device (100) according to one of the preceding claims, **characterized in that** the compensation network (130) comprises at least one complex impedance.

4. Measuring device (100) according to one of the preceding claims, **characterized in that** the compensation network (130) has a variable impedance.

5. Measuring device (100) according to one of the preceding claims, **characterized in that** the impedance can be varied in steps.

6. Measuring device (100) according to Claim 4 or 5, **characterized in that** the control device (110-120, 145-160) is configured for controlling the impedance in dependence of a difference of the alternating voltages.

7. Method (400) for detecting a metallic object (170), comprising the following steps:
- supplying (410) a transmitting coil (125) and a compensation network (130) connected to the transmitting coil (125) with alternating voltages;
- determining a differential voltage applied at the connection of the transmitting coil (125) with the compensation network (130);
- wherein the supplying (410) of the transmitting coil (125) and of the compensation network (130) with alternating voltages is carried out in such a manner that the value of an alternating voltage component, synchronized in timing with the alternating voltages, of the differential voltage is minimized and
- detecting (440) the object (170) when the ratio of the alternating voltages does not correspond to the ratio of the currents flowing through the transmitting coil (125) and the compensation network (130).

8. Computer program product having program code means for performing the method of claim 7 when it runs on a processing device or is stored on a computer-readable data medium.

## Revendications

1. Dispositif de mesure (100) servant à la détection d'un objet métallique (170), le dispositif de mesure (100) suivant comprenant :
- une bobine émettrice (125) pour produire un champ magnétique ;
- un réseau de compensation (130) relié à la bobine émettrice (125) ;
- une tension différentielle régnant au niveau de la jonction de la bobine émettrice (125) avec le réseau de compensation (130) ;
- un dispositif de commande (110-120, 145-160) pour alimenter la bobine émettrice (125) et le réseau de compensation (130) en tensions alternatives de telle sorte qu'une partie de tension alternative, synchrone par rapport à la cadence par rapport aux tensions alternatives, de la tension différentielle est minimisée par rapport à sa valeur ;
**caractérisé en ce que** :
- le dispositif de commande (110-120, 145-160) est conçu pour détecter l'objet métallique (170) lorsque le rapport des tensions alternatives ne correspond pas au rapport des courants circulant à travers la bobine émettrice (125) et le réseau de compensation (130).

2. Dispositif de mesure (100) selon la revendication 1, **caractérisé en ce que** les tensions alternatives sont des tensions alternatives à phase décalée les unes par rapport aux autres afin de faire varier périodiquement la valeur et la phase du champ magnétique de la bobine émettrice (125).

3. Dispositif de mesure (100) selon l'une quelconque des revendications précédentes, **caractérisé en ce que** le réseau de compensation (130) comprend au moins une résistance complexe.

4. Dispositif de mesure (100) selon l'une quelconque des revendications précédentes, **caractérisé en ce que** le réseau de compensation (130) comporte une impédance variable.

5. Dispositif de mesure (100) selon l'une quelconque des revendications précédentes, **caractérisé en ce que** l'impédance peut varier de façon étagée.

6. Dispositif de mesure (100) selon la revendication 4 ou 5, **caractérisé en ce que** le dispositif de commande (110-120, 145-160) est conçu pour commander l'impédance en fonction d'une différence entre les tensions alternatives.

7. Procédé (400) servant à la détection d'un objet métallique (170), comprenant les étapes suivantes :
- alimentation (410) d'une bobine émettrice (125) et d'un réseau de compensation (130) relié à la bobine émettrice (125) en tensions alternatives ;
- détermination d'une tension différentielle régnant au niveau de la jonction de la bobine émettrice (125) avec le réseau de compensation (130) ;
- l'alimentation (410) de la bobine émettrice (125) et du réseau de compensation (130) en tensions alternatives se produisant de telle sorte qu'une partie de tension alternative, synchrone par rapport à la cadence par rapport aux tensions alternatives, de la tension différentielle est minimisée par rapport à sa valeur ; et
- détection (440) de l'objet (170) lorsque le rapport des tensions alternatives ne correspond pas au rapport des courants circulant à travers la bobine émettrice (125) et le réseau de compensation (130).

8. Produit de programme informatique équipé de moyens de code de programmation servant à la mise en oeuvre du procédé de la revendication 7, lorsqu'il est exécuté sur un dispositif de traitement ou mémorisé sur un support de données lisible par ordinateur.
